# EUROPÄISCHE PATENTSCHRIFT

(11) **EP 0 947 090 B1**
(45) Veröffentlichungstag und Bekanntmachung des Hinweises auf die Patenterteilung: **08.05.2002**
(21) Anmeldenummer: 97953655.4
(22) Anmeldetag: 19.12.1997
(51) Int. Cl.: H04M 19/08, H04Q 11/04

(54) **VERFAHREN UND ANORDNUNG ZUR FERNSPEISUNG MEHRERER GLEICHARTIGER VERBRAUCHER AUS EINER ENERGIEQUELLE**
METHOD AND DEVICE FOR REMOTE FEEDING SEVERAL CONSUMERS OF THE SAME TYPE FROM ONE ENERGY SOURCE
PROCEDE ET DISPOSITIF D'ALIMENTATION A DISTANCE DE PLUSIEURS CONSOMMATEURS DE MEME TYPE A PARTIR D'UNE SOURCE D'ENERGIE

(30) Priorität: 20.12.1996 DE 19653625
(43) Veröffentlichungstag der Anmeldung: 06.10.1999
(73) Patentinhaber: SIEMENS AKTIENGESELLSCHAFT, 80333 München (DE)
(72) Erfinder: ALMS, Henrik, D-17489 Greifswald (DE); RICHTER, Frank-Dieter, D-17489 Greifswald (DE)
(86) Internationale Anmeldenummer: DE9702986
(87) Internationale Veröffentlichungsnummer: WO9828904

(56) Entgegenhaltungen:
- EP-A- 0 121 926
- EP-A- 0 417 788
- EP-A- 0 452 286
- US-A- 5 550 894

## Beschreibung

Die Erfindung betrifft ein Verfahren und eine Anordnung zur Fernspeisung mehrerer gleichartiger Verbraucher aus einer Energiequelle.

In Fernsprechnetzen sind Stromversorgungen vorgesehen, die Teilnehmer, beispielsweise ISDN-Teilnehmer, über eine Anschlußeinheit (Networktermination - NT) versorgen. Die Bedingungen für die zur Verfügung zu stellenden Ströme sind in den einschlägigen Normen der Deutschen Telekom AG, ITU und ETSI vorgegeben. So muß jeder Teilnehmer (Line) in der Anschaltphase mit einem begrenzten Strom (beispielsweise bis zu 45 mA) versorgt werden können, während im normalen Betriebsfall ein wesentlich geringer Strom ausreicht. Bei einer "worst case"-Dimensionierung, bei der sämtliche Verbraucher den Maximalstrom benötigen, ist die Stromversorgung für den Normalbetrieb stark überdimensioniert. Eine Dimensionierung, die einen maximalen Verkehrswert, d.h. eine maximale Anzahl von aktiven Verbrauchern zugrundelegt, führt bei hohen Verkehrswerten nur zu einer unbefriedigenden Reduktion der zur Verfügung zu stellenden Versorgungskapazität und ist oftmals überhaupt nicht zulässig.

Aufgabe der Erfindung ist es, ein Verfahren zur Fernspeisung mehrerer Verbraucher anzugeben, das eine geringe Versorgungskapazität der Energiequelle benötigt.
Außerdem ist eine geeignete Anordnung anzugeben.

Diese Aufgabe wird durch ein Verfahren und eine Anordnung zur Fernspeisung mehrerer Verbraucher gemäß den Ansprüchen 1 und 8 gelöst.

Vorteilhafte Weiterbildungen der Erfindung sind in den Unteransprüchen angegeben.

Der besondere Vorteil liegt in der Verringerung der Spitzenbelastung der Energiequelle. Diese kann hierdurch kleiner und mit geringeren Kosten realisiert werden.

Die Spitzenbelastung wird reduziert, indem die Anschaltung der Verbraucher, beispielsweise Fernsprechteilnehmer, nacheinander erfolgt. In der Einschaltphase ist der Strombedarf zunächst höher, er sinkt dann aber auf einen wesentlich geringeren Wert ab.

Durch die Überprüfung der fließenden Ströme und eine Strombegrenzung auf einen Standardwert wird sichergestellt, daß im Fehlerfall die Stromversorgung der ungestörten Teilnehmeranschlüsse sichergestellt ist.

Eine intelligente Steuerung überprüft die Teilnehmeranschlüsse, steuert die Strombegrenzung und führt wiederholt Überprüfungen der Teilnehmeranschlüsse durch, wobei darauf geachtet wird, daß der insgesamt zur Verfügung stehende Strom nicht überschritten wird.

Ein Ausführungsbeispiel der Erfindung wird anhand von Figuren näher erläutert.

Es zeigen:
- Fig. 1: ein Prinzipschaltbild der Stromversorgung,
- Fig. 2: den Anschaltvorgang eines Verbrauchers und
- Fig. 3: den gesamten Anschaltvorgang für mehrere Verbraucher.

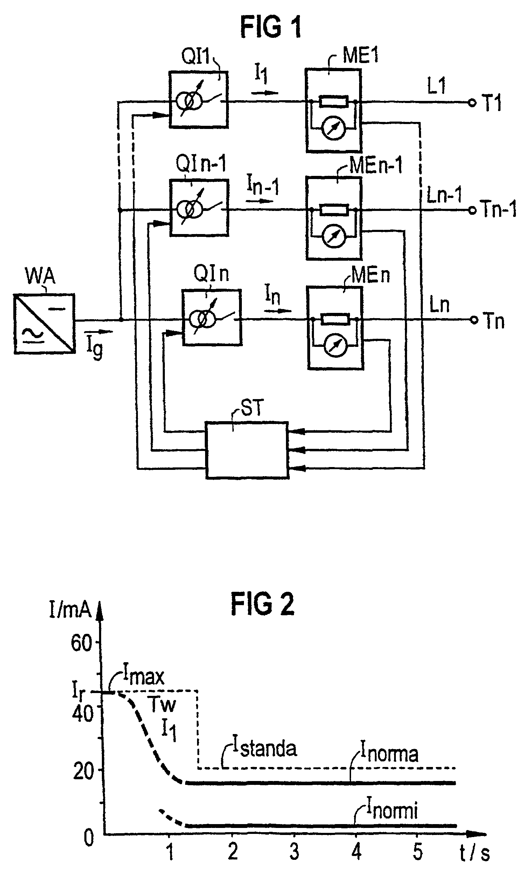

In **Figur 1** ist das Prinzipschaltbild der erfindungsgemäßen Stromversorgung dargestellt.

Ein Wandler WA erzeugt eine bestimmte Gleichspannung, die über steuerbare Stromquellen QI1 bis QIn und jeweils eine nachgeschaltete Meßeinrichtung ME1 bis MEn über Verbindungsleitungen L1 bis Ln den Teilnehmern T1 bis Tn zur Verfügung gestellt wird. Die jeweils fließenden Ströme I₁ bis Iₙ werden durch die steuerbaren Stromquellen QI1 bis QIn begrenzt. Die steuerbaren Stromquellen können beliebig aufgebaut sein. Häufig handelt es sich um mit Verstärkerelementen aufgebaute Konstantstromquellen, deren Begrenzungseinsatz verschoben werden kann und die unterhalb des Begrenzungseinsatzes die Spannung der Energiequelle durchschalten. Eine solche steuerbare Stromquelle ist im Patent DD 250 649 A3 beschrieben.

Die Stromquelle kann auch völlig gesperrt werden, was in Figur 1 als Schalter symbolhaft dargestellt ist. Eine Steuerung ST bestimmt den Einsatz der Strombegrenzung bei den einzelnen Stromquellen. Ihr werden von den Meßeinrichtungen ME1 bis MEn die Meßwerte der tatsächlich fließenden Ströme zugeführt.

Als Steuerung eignet sich ein Mikrorechnersystem. Die Meßwerte werden vor der Verarbeitung digitalisiert.

In **Figur 2** ist der Einschaltvorgang beim (ersten) Teilnehmer T1 dargestellt. Zunächst wird diesem Teilnehmer ein fiktiver Strom Iᵣ zur Verfügung gestellt, der bei einem aktiven Teilnehmer in der Einschaltphase oder bei einer fehlerhaften Anschlußeinheit auch fließen kann und einem maximalen Wert Iₘₐₓ (45mA) entspricht. Ist die Anschlußeinheit fehlerfrei, so wird nach einer Wartezeit Tw der Strom auf den Normwert Iₙₒᵣₘₐ (20 mA) sinken. Die Strombegrenzung wird dann auf den Standardwert I_{standa} reduziert, der entweder etwas über dem gemessenen Wert liegt oder einem konstanten Erfahrungswert entspricht (Bei einem inaktiven Teilnehmer fließt ein wesentlich geringerer Strom Iₙₒᵣₘᵢ).

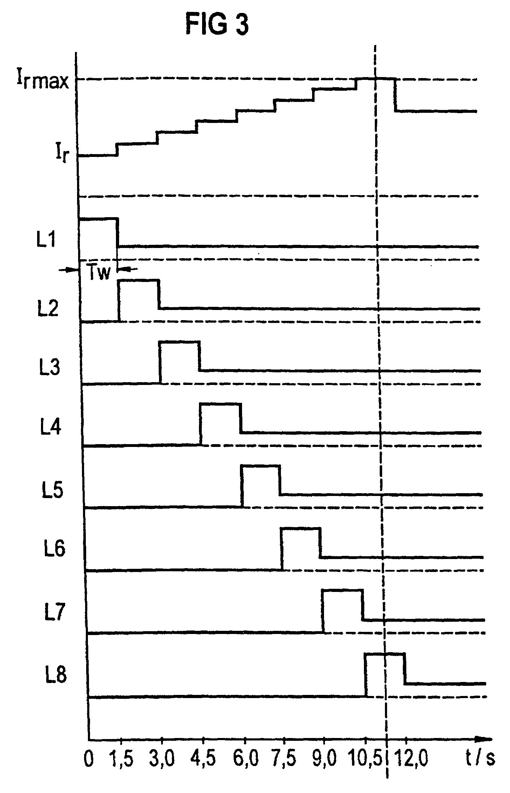

In **Figur 3** ist der gesamte Einschaltvorgang bei 8 Teilnehmern dargestellt. Zunächst wird dem ersten Teilnehmer T1 - wie beschrieben - der Maximalwert Iᵣ = Iₘₐₓ zur Verfügung gestellt, der bei einem fehlerfreien Teilnehmeranschluß auf den Standardwert I_{standa} sinkt. Dann wird dem zweiten Teilnehmer TL2 über die Leitung L2 der Maximalwert zur Verfügung gestellt, wobei sich die insgesamt zur Verfügung gestellten Ströme Iᵣ addieren, wie aus Figur 3 ersichtlich ist.

Wenn dem letzten Teilnehmer T8 über die Leitung L8 der Maximalstrom Iₘₐₓ zur Verfügung gestellt wird, erreicht Iᵣ das Maximum Iᵣₘₐₓ. Dieser fiktive Gesamtstrom entspricht der maximalen Kapazität des Wandlers. Iᵣ kann auf 8 x I_{standa} verringert werden, wenn alle Anschlüsse fehlerfrei sind.

Ist ein Anschluß fehlerhaft, so kann diesem der Maximalstrom Iₘₐₓ zu Prüfzwecken periodisch zur Verfügung gestellt werden. Es ist auch möglich, den Wandler so zu dimensionieren, daß auch zwei oder mehr defekte Anschlüsse mit dem vorgeschriebenen Maximalstrom gleichzeitig versorgt werden können.

Fließt bei einen Teilnehmer auch nach der Einschaltphase ständig ein Strom von der Größenordnung Iₘₐₓ, dann wird der Teilnehmer abgetrennt und periodisch ein neuer Anschaltversuch gestartet. Als Alternative ist die ständige Versorgung mit dem Maximalwert Iₘₐₓ möglich, wenn die Leistungsreserve der Stromversorgung dies zuläßt.

Als Variante ist es zur Verkürzung des Einschaltvorganges auch möglich, jeweils den einzelnen Teilnehmern, beispielsweise T1, T2, T3, einer Gruppe den Maximalstrom Iₘₐₓ zur Verfügung zu stellen, ohne daß Iᵣₘₐₓ überschritten wird. So können in dem angegebenen Beispiel zunächst vier Teilnehmer gleichzeitig angeschaltet werden (180 mA), dann zwei gefolgt von nochmals zwei oder zweimal einem Teilnehmer (je nach Auslegung des maximalen Speisestroms).

Nach der Einschaltphase können die Teilnehmeranschlüsse durch Messen der Speiseströme weiter überwacht und gegebenenfalls abgetrennt und zur Überprüfung erneut angeschaltet werden.

## Patentansprüche

1. Verfahren zur Fernspeisung mehrerer gleichartiger Verbraucher (T1 bis Tn) aus einer Energiequelle (WA),
**dadurch gekennzeichnet,**
**daß** in der Anschaltphase zunächst einem Verbraucher (T1) ein auf einen Maximalwert (Iₘₐₓ) begrenzter Speisestrom zur Verfügung gestellt wird,
**daß** der fließende Speisestrom (I₁) gemessen wird und bei einem fehlerfreien Teilnehmeranschluß nach einer Wartezeit (Tw) die Strombegrenzung des Speisestromes auf einen Standardwert (I_{standa}) reduziert wird,
**daß** danach in derselben Weise die weiteren Verbraucher (T2 bis Tn) angeschaltet und mit Speisestrom (I₂ bis Iₙ) versorgt werden.

2. Verfahren nach Anspruch 1,
**dadurch gekennzeichnet,**
**daß** jeweils Gruppen (T1, T2, T3) von mehreren Teilnehmern gleichzeitig angeschaltet werden, wobei der Speisestrom für jeden Verbraucher auf den Maximalwert (Iₘₐₓ) begrenzt wird und sichergestellt wird, daß ein maximaler zur Verfügung stehender Gesamtspeisestrom (Iᵣₘₐₓ) nicht überschritten wird.

3. Verfahren nach Anspruch 1 oder Anspruch 2,
**dadurch gekennzeichnet,**
**daß** ein Teilnehmer (T1, ...), der nach Ablauf der Wartezeit (Tw) weiter den Maximalwertes (Iₘₐₓ) des Speisestroms aufnimmt, abgeschaltet wird.

4. Verfahren nach Anspruch 1 oder Anspruch 2,
**dadurch gekennzeichnet,**
**daß** einem Teilnehmer (T1, ...), der nach Ablauf der Wartezeit (Tw) weiter den Maximalwertes (Iₘₐₓ) des Speisestroms aufnimmt, bei einer zur Verfügung stehenden Stromreserve der maximale Speisestrom (Iₘₐₓ) zugewiesen wird.

5. Verfahren nach einem der vorhergehenden Ansprüche,
**dadurch gekennzeichnet,**
**daß** die fehlerhafte Anschalteinheit eines Teilnehmers periodisch mit dem Maximalwertes (Iₘₐₓ) des Speisestroms überprüft wird.

6. Verfahren nach einem der Ansprüche 1 bis 5,
**dadurch gekennzeichnet,**
**daß** Iᵣₘₐₓ = Iₘₐₓ + (n-1) I_{standa}, wobei
Iᵣₘₐₓ = der maximale insgesamt zur Verfügung gestellte Speisestrom,
Iₘₐₓ = der einem einzelnen Teilnehmer maximal zur Verfügung gestellte Speisestrom,
I_{standa} = der einem Teilnehmer nach der Anschaltphase zur Verfügung gestellte Speisestrom und
n = Anzahl der Teilnehmer ist.

7. Verfahren nach einem der Ansprüche 1 bis 5,
**dadurch gekennzeichnet,**
**daß** Iᵣₘₐₓ = m x Iₘₐₓ + (n - m) I_{standa}, wobei m die Anzahl der Mitglieder einer Gruppe und kleiner als n ist.

8. Anordnung zur Fernspeisung mehrerer Verbraucher (T1 bis Tn) mit einer Energiequelle (WA) und mehreren daran angeschalteten Reihenschaltungen von jeweils einer steuerbaren Stromquelle (QT1 bis QTn) und einer Meßeinrichtung (ME2 bis MEn), an die jeweils ein Verbraucher angeschlossenen ist, und mit einer Steuerung (ST) zum Überwachen von Speiseströmen (I₁ bis In) und Einstellen von Strombegrenzungswerten der Stromquellen (QT1 bis QTn), der von den Meßeinrichtungen (ME2 bis MEn) die Werte der Speiseströme (I₁ bis Iₙ) zugeführt werden, wobei während der Anschaltphase zunächst der Speisestrom auf einen Maximalwert (Iₘₐₓ) begrenzt wird und nach einer Wartezeit (TW) die Strombegrenzung des Speisestromes auf einen Standardwert (I_{standa}) reduziert wird.

9. Anordnung nach Anspruch 8,
**dadurch gekennzeichnet,**
**daß** sie zur Fernspeisung von mehreren ISDN-Teilnehmern (T1 bis Tn) vorgesehen ist.

## Claims

1. Method for remote supply of a number of identical loads (T1 to Tn) from one energy source (WA),
**characterized**
**in that**, in the connection phase, a supply current which is limited to a maximum value (Iₘₐₓ) is initially provided for a load (T1),
**in that** the supply current (I₁) which flows is measured and, in the event of a faulty subscriber connection, the current limiting for the supply current is reduced to a standard value (I_{standa}) after a waiting time (Tw) and
**in that**, after this, the further loads (T2 to Tn) are connected and are supplied with supply current (I₂ to Iₙ) in the same way.

2. Method according to Claim 1,
**characterized**
**in that** groups (T1, T2, T3) of a number of subscribers are in each case connected at the same time, with the supply current for each load being limited to the maximum value (Iₘₐₓ), and ensuring that a maximum available total supply current (Iᵣₘₐₓ) is not exceeded.

3. Method according to Claim 1 or Claim 2,
**characterized**
**in that** a subscriber (T1,...) who is still consuming the maximum value (Iₘₐₓ) of the supply current once the waiting time (Tw) has elapsed is switched off.

4. Method according to Claim 1 or Claim 2,
**characterized**
**in that** a subscriber (T1,...) who is still consuming the maximum value (Iₘₐₓ) of the supply current once the waiting time (Tw) has elapsed is assigned the maximum supply current (Iₘₐₓ) when a current reserve is available.

5. Method according to one of the preceding claims,
**characterized**
**in that** the faulty connection unit of a subscriber is periodically checked with the maximum value (Iₘₐₓ) of the supply current.

6. Method according to one of Claims 1 to 5,
**characterized**
**in that** Iᵣₘₐₓ = Iₘₐₓ + (n-1 ) I_{standa}, where
Iᵣₘₐₓ = the total maximum available supply current,
Iₘₐₓ = the maximum supply current available to an individual subscriber,
I_{standa} = the supply current available to a subscriber after the connection phase, and
n = the number of subscribers.

7. Method according to one of Claims 1 to 5,
**characterized**
**in that** Iᵣₘₐₓ = m x Iₘₐₓ + (n - m) I_{standa}, where m is the number of members of a group, and is less than n.

8. Arrangement for remote supply of a number of loads (T1 to Tn) with one energy source (WA) and a number of series circuits connected to it, each comprising a controllable current source (QT1 to QTn) and a measurement device (ME2 to MEn) to each of which one load is connected, and having a controller (ST) for monitoring supply currents (I₁ to Iₙ) and for setting current limit values for the current sources (QT1 to QTn), to which the values of the supply currents (I₁ to Iₙ) are supplied from the measurement devices (ME2 to MEn), with the supply current first of all being limited to a maximum value (Iₘₐₓ) during the connection phase, and the current limit for the supply current being reduced to a standard value (I_{standa}) after a waiting time (TW).

9. Arrangement according to Claim 8,
**characterized**
**in that** said arrangement is intended for remote supply for a number of ISDN subscribers (T1 to Tn).

## Revendications

1. Procédé destiné à l'alimentation à distance de plusieurs consommateurs (T1 à Tn) d'un même type à partir d'une source d'énergie (WA),
**caractérisé par le fait**
**que**, au cours de la phase de mise en circuit, un courant d'alimentation limité à une valeur maximum (Iₘₐₓ) est, d'abord, mis à la disposition d'un consommateur (T1),
**que** le courant d'alimentation (I₁) qui circule est mesuré et, dans le cas d'un raccordement d'abonné dénué de dérangement, après une temporisation (Tw), la limitation du courant d'alimentation est réduite à une valeur standard (I_{standa}),
**que**, ensuite et de la même façon, les autres consommateurs (T2 à Tn) sont mis en circuit et alimentés en courant d'alimentation (I₂ à Iₙ).

2. Procédé selon la revendication 1
**caractérisé par le fait**
**que**, groupe par groupe, plusieurs abonnés (T1, T2, T3) sont mis en circuit simultanément, le courant d'alimentation destiné à chaque consommateur étant limité à une valeur maximum (Iₘₐₓ) et en garantissant qu'un courant total maximum d'alimentation (Iᵣₘₐₓ) mis à disposition ne soit pas dépassé.

3. Procédé selon la revendication 1 ou la revendication 2
**caractérisé par le fait**
**qu'**un abonné (T1, ...) qui continue à absorber, après une temporisation (Tw), la valeur maximum (Iₘₐₓ) du courant d'alimentation, est déconnecté.

4. Procédé selon la revendication 1 ou la revendication 2
**caractérisé par le fait**
**qu'**à un abonné (T1, ...) qui continue à absorber, après une temporisation (Tw), la valeur maximum (Iₘₐₓ) du courant d'alimentation, on affecte, si la réserve de courant est disponible, le courant d'alimentation maximum (Iₘₐₓ).

5. Procédé selon l'une des revendications précédentes
**caractérisé par le fait**
**que** l'unité de mise en circuit défectueuse d'un abonné est vérifiée périodiquement avec la valeur maximum (Iₘₐₓ) du courant d'alimentation.

6. Procédé selon l'une des revendications 1 à 5
**caractérisé par le fait**
**que** Iᵣₘₐₓ = Iₘₐₓ + (n - 1) I_{standa}, dans laquelle
Iᵣₘₐₓ = le courant d'alimentation maximum mis au total à disposition,
Iₘₐₓ = le courant d'alimentation mis au maximum à la disposition d'un abonné individuel,
I_{standa} = le courant d'alimentation mis à la disposition d'un abonné après la phase de mise en circuit et
n = le nombre des abonnés.

7. Procédé selon l'une des revendications 1 à 5
**caractérisé par le fait**
**que** Iᵣₘₐₓ = m x Iₘₐₓ + (n - m) I_{standa}, dans laquelle m est le nombre des éléments d'un groupe et plus petit que n.

8. Dispositif destiné à l'alimentation à distance de plusieurs consommateurs (T1 à Tn), ayant une source d'énergie (WA) et plusieurs circuits en série, qui lui sont raccordés, comportant chacun une source de courant réglable (QT1 à QTn) et un dispositif de mesure (ME2 à MEn), sur chacun desquels est raccordé un consommateur, et une commande (ST), destinée au contrôle des courants d'alimentation (I₁ à Iₙ) et au réglage de valeurs de limitation du courant des sources de courant (QT1 à QTn), à laquelle les dispositifs de mesure (ME2 à MEn) transmettent les valeurs des courants d'alimentation (I₁ à Iₙ), le courant d'alimentation étant d'abord, pendant la phase de mise en circuit, limité à une valeur maximum (Iₘₐₓ) et, après une temporisation (Tw), la limitation du courant d'alimentation étant réduite à une valeur standard (I_{standa}).

9. Dispositif selon la revendication 8
**caractérisé par le fait**
**qu'**il est destiné à l'alimentation à distance de plusieurs abonnés RNIS (T1 à Tn).
